# FASCICULE DE BREVET EUROPEEN

(11) **EP 0 465 372 B1**
(45) Date de publication et mention de la délivrance du brevet: **03.01.1996**
(21) Numéro de dépôt: 91401862.7
(22) Date de dépôt: 04.07.1991
(51) Int. Cl.: G05B 19/4061

(54) **Procédé de déplacement d'un bras de robot comprenant deux tronçons articulés entre eux**
Vorbereitungsprozess für einen Roboterarm, der zwei ineinandergefügte Gelenkarme umfasst
Preparation process for a robot arm, comprising two inter-connected articulated segments

(30) Priorité: 04.07.1990 FR 9008471
(43) Date de publication de la demande: 08.01.1992
(73) Titulaire: COMMISSARIAT A L'ENERGIE ATOMIQUE, F-75015 Paris (FR)
(72) Inventeur: Detriche, Jean-Marie, F-78590 Noisy le Roi (FR); Sgarbi, Frédéric, F-75016 Paris (FR)
(74) Mandataire: Ilgart, Jean-Christophe

(56) Documents cités:
- EP-A- 0 044 737
- PATENT ABSTRACTS OF JAPAN, vol. 10, no. 348 (P-519)[2404], 22 novembre 1986; & JP-A-61 147 307
- PROCEEDINGS 1988 IEEE INTERNATIONAL CONFERENCE ON ROBOTICS AND AUTOMATION, vol. 2, 29 avril 1988, pages 740-745, Yale University, New Haven, Conn, US; E. CHEUNG et al.: "Motion planning for robot arm manipulators with proximity sensing"

## Description

L'invention concerne un procédé de déplacement d'un bras de robot comprenant deux tronçons articulés entre eux, où l'un des tronçons est en outre articulé à un support et l'autre tronçon est terminé par une extrémité libre pouvant porter en pratique un organe terminal tel qu'un poignet par une autre articulation.

Les articulations sont munies de codeurs de position qui permettent, par une conversion de coordonnées, de calculer la position de l'extrémité libre en coordonnées cartésiennes dans un repère fixe. Quand un déplacement du bras est décidé, la position que l'extrémité libre doit atteindre est introduite par l'utilisateur et l'ordinateur de commande déduit quelle position le bras doit prendre. Les deux articulations sont mises alors simultanément en mouvement pour converger vers l'état souhaité. On ignore la trajectoire suivie par l'extrémité libre, ce qui peut présenter des dangers si l'utilisateur est à proximité ou s'il existe d'autres obstacles, en particulier si le bras doit passer par un état d'extension ou de "reconfiguration" où ses deux tronçons sont mis en prolongement, ou par des positions analogues.

Une "reconfiguration" est nécessaire dans un certain nombre de cas. En effet, si tout point situé à portée du bras semble pouvoir être atteint selon deux positions des tronçons, qui sont symétriques par rapport à une ligne passant par ce point et par l'articulation au support, une de ces positions peut être interdite dans certains cas car le bras entrerait en collision avec des obstacles voisins. Dans une telle situation où aucun choix n'existe, le déplacement du bras peut nécessiter une mise en prolongement des tronçons pendant le trajet de ralliement, mais les logiciels de programmation connus font converger le bras vers l'état qui n'implique pas de reconfiguration, c'est-à-dire dont la convexité que forment les deux tronçons est orientée du même côté qu'à l'état initial du bras.

Il s'ensuit que le trajet de ralliement est arrêté dès qu'un obstacle est atteint ou dès que l'imminence d'une collision incite l'utilisateur à provoquer un arrêt. Il faut alors reprendre le trajet en imposant une mise en prolongement des tronçons par une action manuelle, ce qui est peu pratique et allonge sensiblement la durée totale du trajet.

Une autre solution connue consiste à installer un logiciel de simulation du trajet de ralliement sur le robot. Le logiciel calcule les coordonnées d'un nombre de points suffisamment important du trajet et détecte si une collision se produira. Dans l'affirmative, l'utilisateur en est informé et doit retoucher le trajet défini par la simulation de façon à introduire des points de passage admissibles et à imposer un état de mise en prolongement. On évite les déplacements inutiles du bras vers des états inadmissibles, mais il faut accepter un logiciel plus complexe et les corrections de trajet sont à peu près aussi fastidieuses que dans le cas précédent.

Le brevet EP-A-0 044 737 concerne une solution où l'utilisateur peut imposer un changement de sens de concavité du bras le long d'un trajet de ralliement, pour éviter que le coude ne heurte un objet. Enfin, JP-A-61 147 307 décrit une "dérivation" du trajet projeté pour faire passer l'extrémité du bras à l'écart d'un volume interdit, par un mouvement supplémentaire perpendiculaire à la direction du trajet, comme on le propose dans la revendication dépendante 2 de cette demande-ci.

Au lieu de cela, la mise en oeuvre de l'invention implique que le trajet de ralliement au point de destination de l'extrémité libre du bras est calculé ou défini selon la nécessité éventuelle d'une mise en prolongement des tronçons, sans qu'un trajet préliminaire doive être défini et vérifié. En d'autres termes, on ne définit que le trajet qui sera effectivement suivi, et aucun risque de devoir corriger manuellement ce trajet n'existe.

On est donc en présence d'un procédé de déplacement d'un bras de robot comprenant un premier tronçon articulé à un support et un second tronçon à extrémité libre, les deux tronçons étant articulés entre eux entre le support et l'extrémité libre, par des mouvements des deux articulations amenant l'extrémité libre à un point de destination, caractérisé en ce qu'il consiste à déterminer à l'aide de coordonnées définissant le point de destination et de la position du bras avant de commencer le déplacement si une mise en prolongement des tronçons est nécessaire, et à définir un trajet de ralliement de l'extrémité libre au point de destination dans l'affirmative.

Le trajet de ralliement est défini par des points de passage choisis de façon qu'une frontière limitant une zone interdite soit longée mais pas franchie par l'extrémité libre ; ils peuvent être situés sur la frontière ou près d'elle. Un des points de passage correspond à la position de mise en prolongement.

Les points de passage sont reliés par des portions de trajectoire telles que des segments ou des courbes où les vitesses des articulations sont imposées pour suivre ces portions ; ailleurs, c'est-à-dire du point de départ au premier point de passage et du dernier point de passage au point de destination, les vitesses des articulations sont uniformes, comme il est habituel.

Le procédé peut inclure des mouvements d'ensemble du bras perpendiculairement au plan de déplacement normal, afin d'éviter les environnements trop encombrés. Par ailleurs, l'invention peut être appliquée à des situations où le bras peut rencontrer des obstacles de position inconnue qui constituent alors la frontière. Ces obstacles sont alors repérés par des capteurs de proximité ou de contact disposés sur le bras. Le réglage mutuel des mouvements des deux articulations a alors pour but de contourner les obstacles.

Si par contre la frontière a une position connue, la détermination de son franchissement peut être obtenue en suivant constamment les mouvements des articulations et en calculant la position de l'extrémité libre.

On va maintenant passer au commentaire des figures annexées à titre illustratif et non limitatif qui décrivent une réalisation préférée de l'invention :
- la figure 1 représente un bras de robot typique ;
- la figure 2 illustre le déroulement du procédé ;
- la figure 3 représente une variante du procédé ; et
- la figure 4 exprime le procédé par un organigramme.

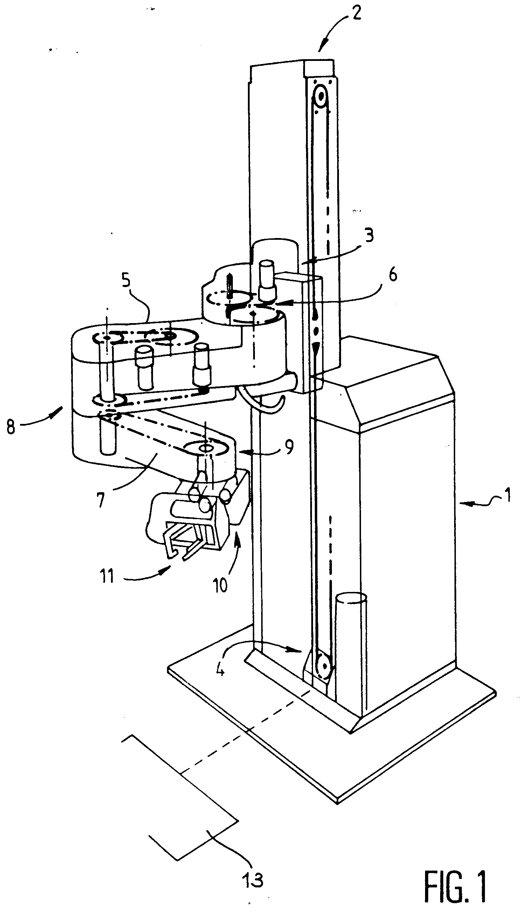

Le bras de robot de la figure 1 comprend tout d'abord un bâti fixe 1 muni d'une glissière verticale 2 sur laquelle un support 3 se déplace au moyen d'un mécanisme à poulie et courroie globalement référencé par 4. Le support 3 porte un premier tronçon 5 par l'intermédiaire d'une première articulation 6 d'axe vertical, et l'extrémité du premier tronçon 5 opposée au support 3 est reliée à un second tronçon 7 au moyen d'une seconde articulation 8. L'extrémité libre 9 du second tronçon 7, opposée à la seconde articulation 8, porte au moyen d'une troisième articulation d'axe vertical un poignet 10 terminé par une pince 11. Les mouvements des articulations sont régis par des systèmes à poulie, courroie et moteur d'entraînement et comprennent également des codeurs permettant de repérer leurs positions angulaires, comme on l'a représenté. Ces systèmes sont toutefois déjà connus et ne seront pas décrits davantage.

L'emplacement d'un obstacle a également été représenté. Il peut concrètement s'agir, parmi de nombreuses autres possibilités qui dépendent de l'utilisation du robot, d'un siège 13 de handicapé. Le robot est alors piloté par l'occupant du siège 13 pour l'assister dans des tâches de manipulation, lui apporter des objets en particulier.

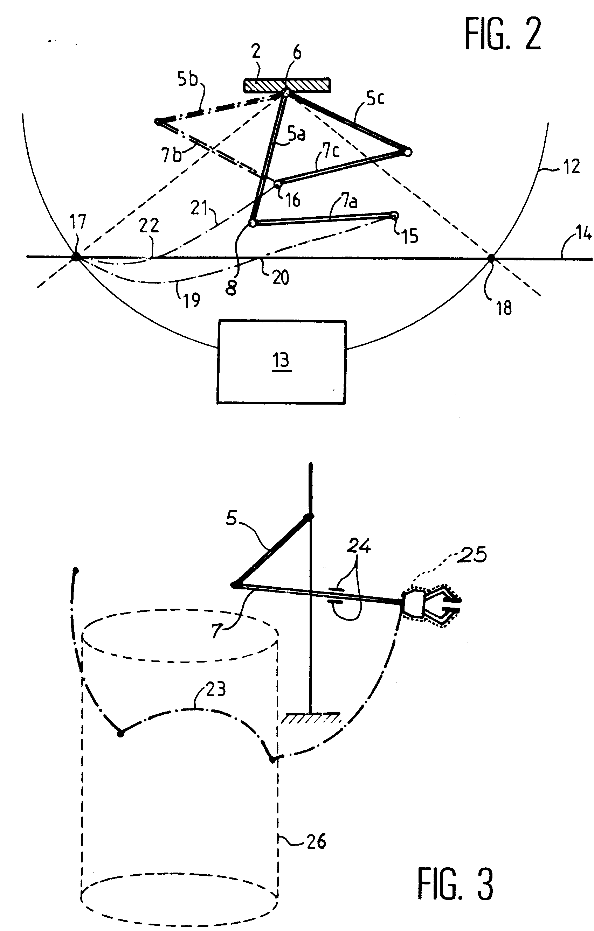

Considérons (figure 2) un plan horizontal, correspondant pratiquement à l'espace où se meuvent les tronçons 5 et 7. L'extrémité libre 9 peut se mouvoir à l'intérieur d'un demi-cercle 12 centré sur la première articulation 6 et dont le rayon est égal à la somme des longueurs des deux tronçons 5 et 7. Le siège 13 est partiellement situé à l'intérieur de ce demi-cercle.

Afin d'éviter que l'extrémité libre 9 ne rencontre le siège 13 ou son occupant, on définit une frontière 14 dont le franchissement est interdit à l'extrémité libre 9 et qui passe à une distance suffisante du siège 13.

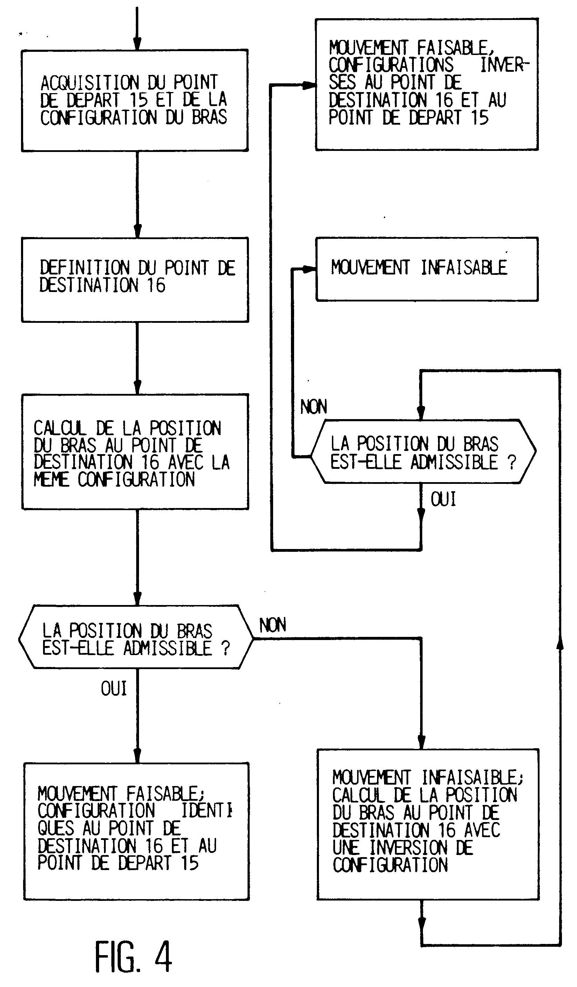

Si maintenant on se préoccupe de faire passer l'extrémité libre 9 d'un point de départ 15 à un point de destination 16, les tronçons 5 et 7 occupant les positions de départ 5a et 7a, il serait théoriquement, dans la configuration représentée, plus simple d'effectuer des mouvements des articulations 6 et 8 de manière à arriver aux positions de destination 5b et 7b où l'angle défini par les tronçons 5 et 7 a une convexité dans le même sens qu'à la position de départ. Il suffirait alors de mettre en mouvement les articulations 6 et 8 simultanément et à des vitesses de rotation uniformes et différentes, de sorte que les tronçons 5 et 7 arriveraient ensemble à l'état souhaité. Cette position de destination 5b et 7b peut toutefois être exclue car alors le premier tronçon 5 serait trop près de la glissière verticale 2 (des butées angulaires situées sur les articulations 6 et 8 sont de toute façon installées pour que les positions dangereuses du bras ne soient jamais atteintes), et c'est pourquoi on peut être obligé de choisir plutôt la position définie par les positions de destination 5c et 7c, symétrique par rapport à la précédente. Il est alors nécessaire de passer par une position où les tronçons 5 et 7 sont en prolongement, ce qui est déterminé par le système de commande du robot avant de commencer les mouvements des articulations 6 et 8, selon l'organigramme de la figure 4. L'extrémité libre 9 est alors dirigée vers un des deux points 17 ou 18 appartenant à la fois à la frontière 14 et au demi-cercle 12. Le point choisi, ici 17, peut être le plus proche du point de destination 16, mais on aurait pu choisir également le point le plus proche du point de départ 15.

Le point de destination 16 est défini par des coordonnées qui peuvent être notamment ses coordonnées cartésiennes dans le plan du bras. Il est possible de fournir directement lesdites coordonnées au système de pilotage du robot ; si le point de destination 16 est un objectif possible parmi une liste mémorisée par le système de pilotage et dont les coordonnées ont été déduites par un apprentissage antérieur du robot, on peut se contenter de l'identifier.

La direction de la convexité de l'angle défini par les tronçons 5 et 7 peut être déduite au point de départ 15 par l'indication du capteur de position angulaire situé à la seconde articulation 8. La possibilité d'arriver au point de destination 16 suivant une ou deux configurations du bras est déterminée par un calcul ou une programmation préalable.

Le calcul peut consister à calculer les positions des tronçons 5 et 7 et de la seconde articulation 8; Dans l'exemple choisi, on conclurait donc que la position 5b du premier tronçon 5 serait trop proche de la glissière verticale 2 en comparant cette position à une limite fixe programmée auparavant.

Si on n'utilise qu'une programmation, celle-ci peut consister à définir les points du plan qui ne peuvent être atteints que par une configuration du bras. Ces points peuvent être identifiés s'ils sont peu nombreux ou définis sous forme d'un ensemble limité par une courbe dont l'équation est fournie au système de pilotage par une programmation. On peut ainsi décider que tous les points dont la distance à la frontière 14 dépasse une certaine valeur, ainsi que tous ceux dont la distance latérale (parallèlement à la frontière 14) à la première articulation 6 dépasse une certaine valeur (qui peut être différente de la précédente) ne pourront être atteints que par une configuration unique du bras, et que tous les autres points pourront l'être par les deux configurations. Ou encore, on calcule les coordonnées de position angulaire des tronçons au point de destination et on conclut qu'un état impossible est atteint si ces positions angulaires sont outrepassées.

Le mouvement de convergence de l'extrémité libre 9 vers ce point d'extension 17 s'effectuerait suivant une courbe 19 si les rotations autour des deux articulations 6 et 8 étaient menées à des vitesses uniformes, comme on procède usuellement. La courbe 19 franchirait toutefois souvent, comme ici, la frontière 14, du moins quand celle-ci existe. C'est pourquoi avant de lancer le mouvement, on recherche s'il existe des points 20 et 22, et, dans l'affirmative, les tronçons 15-20, 20-17, 17-22 et 22-16 sont calculés à l'avance. Dès que le point de franchissement 20 de la frontière 14 est atteint, le système de commande du robot règle mutuellement les mouvements des articulations 6 et 8 de sorte que l'extrémité libre 9 parcoure un segment coïncidant avec la frontière 14 entre le point de franchissement 20 et le point d'extension 17. La convergence sans précaution de l'extrémité libre 9 du point d'extension 17 vers le point de destination 16 pourrait de même impliquer le parcours d'une courbe 21 partiellement hors de la frontière 14. On fait donc parcourir dans les mêmes conditions de commande un segment compris entre le point d'extension 17 et le point de franchissement 22 de la frontière 14 par la courbe 21. Le reste de la courbe 21 est suivi sans précaution par l'extrémité libre 9.

Plusieurs aménagements peuvent être apportés au procédé. Tout d'abord, les mouvements horizontaux de l'extrémité libre 9 peuvent être précédés par un mouvement de dégagement vertical de l'ensemble du bras vers le haut, grâce au mécanisme 4, afin de faire évoluer le poignet 10 dans un environnement moins encombré.

La frontière peut par ailleurs avoir une forme différente comme le représente la figure 3 : on définit en fait un volume de sécurité 26 cylindrique, et la frontière est alors un arc de cercle 23.

Enfin, la frontière peut être indéfinie et matérialisée par des obstacles de position inconnue. On munit alors le bras de robot de capteurs permettant de reconnaître ces obstacles : il peut s'agir de capteurs de proximité ou de contact sur les tronçons ou d'un revêtement capacitif sur le poignet 10 ou la pince 11 qui est sensible à toute proximité d'un obstacle. Sur la figure 3, on a représenté une paire de jauges de contrainte 24 sur deux faces opposées du second tronçon 7, et 25 désigne le revêtement capacitif. Les jauges de contrainte 24 sont sensibles aux efforts produits sur le second tronçon 7 quand un obstacle est atteint.

Dans ce cas comme dans le cas d'une frontière de position connue, les mouvements des deux articulations 6 et 8 sont réglés de sorte que l'extrémité libre 9 contourne les obstacles avant de reprendre son mouvement normal. Aucun calcul n'est entrepris puisque la position et le volume des obstacles sont inconnus, mais on se contente de procéder empiriquement. Par exemple, on peut poursuivre le mouvement primitif de la première articulation 6 tout en effectuant un mouvement de dégagement en sens inverse pour la seconde articulation 8. Dans une autre réalisation, cette fonction de contournement n'est mise en oeuvre que si les obstacles se trouvent à l'intérieur d'un volume de sécurité défini par une frontière que l'extrémité libre 9 peut alors franchir. Les obstacles àl'extérieur de ce volume de sécurité n'empêchent alors pas le mouvement du bras, ce qui lui permet si nécessaire de se frayer un chemin parmi eux.

Le procédé conforme à l'invention peut avantageusement être recommencé dès que les obstacles ont été dépassés. En effet, on a dû s'éloigner du trajet qui avait été défini auparavant, et il est possible que des changements de configuration du bras qui auraient été superflus en l'absence des obstacles soient maintenant devenus nécessaires. Le procédé résumé par l'organigramme de la figure 4 est donc appliqué au trajet entre le point atteint après qu'on a dépassé les obstacles et le point de destination.

Il en va de même à chaque fois qu'on modifie localement le trajet pour une raison quelconque par une action manuelle, ou qu'on arrête temporairement le fonctionnement. Un cas plus compliqué est résolu d'une manière analogue : il s'agit de la correction en temps réel d'une trajectoire programmée par une action manuelle continue, par exemple quand on cherche à éviter un obstacle tel que celui de la figure 3, quand le bras est dépourvu de capteurs de proximité ou de contact et ne peut donc pas détecter l'obstacle. L'utilisateur doit alors dévier le bras de sa trajectoire. Il est alors nécessaire de recommencer périodiquement le procédé conforme à l'invention pour ajuster la trajectoire ralliant le point de destination.

## Revendications

1. Procédé de déplacement d'un bras de robot comprenant un premier tronçon (5) articulé à un support (2) et un second tronçon (7) à extrémité libre (9), les deux tronçons étant articulés entre eux entre le support et l'extrémité libre, par des mouvements des deux articulations (6, 8) amenant l'extrémité libre à un point de destination (16), caractérisé en ce qu'il consiste à déterminer à l'aide de coordonnées définissant le point de destination et de la position du bras à un point de départ (15), avant de commencer le déplacement, si une mise en prolongement des tronçons est nécessaire et à définir, dans l'affirmative, un trajet de ralliement de l'extrémité libre au point de destination qui passe par des points de passage (17, 20, 22) se trouvant en-deçà d'une frontière (14) délimitant les déplacements autorisés ou sur cette frontière et dont l'un (17) correspond à une mise en prolongement des tronçons (5, 7), les points de passage (20, 17, 22) étant reliés par des portions de trajectoire qui longent la frontière, le point de départ (15) et un premier des points de passage (20), ainsi qu'un dernier des points de passage (22) et le point de destination (16) étant reliés par des déplacements où les vitesses de rotation des articulations (6, 8) sont uniformes, et les vitesses des articulations étant modifiées entre les points de passage pour suivre les portions de trajectoire qui longent la frontière (14).

2. Procédé de déplacement d'un bras de robot suivant la revendication 1, caractérisé en ce qu'il comprend des mouvements d'ensemble (4) du bras perpendiculairement à un plan où se déplacent les tronçons.

3. Procédé de déplacement d'un bras de robot suivant l'une quelconque des revendications 1 ou 2, caractérisé en ce qu'il consiste à régler les mouvements des articulations de manière que l'extrémité libre contourne des obstacles de position inconnue, que la frontière (26) délimite, quand les obstacles sont repérés par des capteurs de proximité ou de contact (24, 25) disposés sur le bras.

## Patentansprüche

1. Vorbereitungs- bzw. Bewegungsprozeß für einen Roboterarm, umfassend ein erstes Teilstück (5), angelenkt an einen Träger (2), und ein zweites Teilstück (7) mit freiem Ende (9), wobei die beiden Teilstücke zwischen dem Träger und dem freien Ende gelenkig miteinander verbunden sind durch Bewegungen der beiden Gelenke (6, 8), die das freie Ende zu einem Zielpunkt (16) bringen,
**dadurch gekennzeichnet,** daß er darin besteht, mit Hilfe von Koordinaten, die den Zielpunkt definieren, und der Position des Arms in einem Ausgangspunkt (15), vor dem Beginn der Bewegung festzustellen, ob ein Längerstellen der Teilstücke nötig ist und, bei Bestätigung, eine Strecke zu definieren, auf der das freie Ende den Zielpunkt erreicht und die die Durchgangspunkte (17, 20, 22) durchläuft, die sich diesseits einer die zulässigen Bewegungen einschränkenden Grenze (14) befinden oder auf dieser Grenze und von denen einer (17) einem Längerstellen der Teilstücke (5, 7) entspricht, wobei die Durchgangspunkte (20, 17, 22) verbunden sind durch Streckenabschnitte, die längs der Grenze verlaufen, der Ausgangspunkt (15) und ein erster der Durchgangspunkte (20) sowie ein letzter der Durchgangspunkte (22) und der Zielpunkt (16) verbunden sind durch Bewegungen, bei denen die Rotationsgeschwindigkeiten der Gelenke (6, 8) gleichmäßig sind, und die Geschwindigkeiten der Gelenke verändert werden zwischen den Durchgangspunkten, um den Streckenabschnitten zu folgen, die der Grenze (14) entlang verlaufen.

2. Bewegungsprozeß eines Roboterarms nach Anspruch 1, dadurch gekennzeichnet, daß er Gesamtbewegungen (4) des Arms senkrecht zu einer Ebene umfaßt, in der sich die Teilstücke bewegen.

3. Bewegungsprozeß eines Roboterarms nach einem der Ansprüche 1 oder 2, dadurch gekennzeichnet, daß er darin besteht, die Bewegungen der Gelenke so zu regeln, daß das freie Ende Hindernisse unbekannter Position, die die Grenze (26) begrenzt, umfährt, wenn die Hindernisse festgestellt werden durch Abstands- oder Kontaktmelder (24, 25), angeordnet auf dem Arm.

## Claims

1. Process for displacing a robot arm comprising a first segment (5) articulated to a support (2) and a second segment (7) with a free end (9), the two segments being articulated to each other between the support and the free end, via motions of the two articulations (6, 8) bringing the free end to a destination point (16), characterized in that it consists in determining with the aid of coordinates defining the destination point and of the position of the arm at a starting point (15), before beginning the displacement, whether it is necessary to align the segments with each other and, if so, in defining a path for homing the free end in on the destination point which passes through transit points (17, 20, 22) lying within a boundary (14) delimiting the permitted displacements or on this boundary and one (17) of which corresponds to an alignment of the segments (5, 7) with each other, the transit points (20, 17, 22) being connected by portions of trajectory which border the boundary, the starting point (15) and a first of the transit points (20), as well as a last of the transit points (22) and the destination point (16) being connected by displacements in which the speeds of rotation of the articulations (6, 8) are uniform, and the speeds of the articulations being modified between the transit points so as to follow the portions of trajectory which border the boundary (14).

2. Process for displacing a robot arm according to Claim 1, characterized in that it comprises overall motions (4) of the arm perpendicular to a plane in which the segments are displaced.

3. Process for displacing a robot arm according to either one of Claims 1 and 2, characterized in that it consists in controlling the motions of the articulations in such a way that the free end sidesteps obstacles of unknown position, which the boundary (26) delimits, when the obstacles are pinpointed by proximity or contact sensors (24, 25) located on the arm.
